Europäisches Patentamt

European Patent Office

Office européen des brevets

(11) Veröffentlichungsnummer: **0 271 745 B1**

# (12) EUROPÄISCHE PATENTSCHRIFT

(45) Veröffentlichungstag der Patentschrift: **15.04.92**

(21) Anmeldenummer: **87117265.6**

(22) Anmeldetag: **24.11.87**

(51) Int. Cl.⁵: **B60S 1/08**

(54) **Wischanlage für Fahrzeuge.**

(30) Priorität: **19.12.86 DE 3643414**

(43) Veröffentlichungstag der Anmeldung:
**22.06.88 Patentblatt 88/25**

(45) Bekanntmachung des Hinweises auf die
Patenterteilung:
**15.04.92 Patentblatt 92/16**

(84) Benannte Vertragsstaaten:
**FR GB IT**

(56) Entgegenhaltungen:
**EP-A- 0 029 386**
**GB-A- 1 495 487**
**GB-A- 2 146 799**

(73) Patentinhaber: **SWF Auto-Electric GmbH**
**Stuttgarter Strasse 119 Postfach 135**
**W-7120 Bietigheim-Bissingen(DE)**

(72) Erfinder: **Gillé, Günther**
**Danziger Weg 4**
**W-7126 Sersheim(DE)**
Erfinder: **Goertler, Horst**
**Metterzimmerer Strasse 12**
**W-7123 Sachsenheim 2(DE)**

## Beschreibung

Die Erfindung bezieht sich auf eine Wischanlage für Fahrzeuge gemäß den Merkmalen des Oberbegriffs des Anspruchs 1 (siehe z.B. EP-A-0 028 386).

Bei Wischanlagen in modernen Kraftfahrzeugen können über einen Betriebsschalter mehrere Betriebsarten, z.B. Dauerbetrieb, Intervallbetrieb, Wisch-Wasch-Betrieb eingestellt werden. Zur Realisierung dieser unterschiedlichen Betriebsarten benötigt man ein Steuergerät mit einem Schaltkreis, der zeitabhängige Schalt- und/oder Steuersignale auslöst. Ein zeitabhängiges Schaltsignal legt beispielsweise die Intervallpause im Intervallbetrieb fest, ein anderes zeitabhängiges Schaltsignal könnte die Nachwischzeit im Wisch-Wasch-Betrieb festlegen. Die Zeitdauer derartiger Schaltsignale soll im allgemeinen möglichst konstant sein und nicht von irgendwelchen Umgebungsbedingungen abhängen.

Es sind auch bereits Wischanlagen bekannt, bei denen der Wischermotor abgeschaltet wird, wenn der Wischer außerhalb seiner Parklage blokkiert werden sollte und damit innerhalb einer vorgegebenen Zeitspanne seine Parklage nicht wieder erreicht. Zur Erfüllung dieses Blockierschutzes benötigt man also ebenfalls zeitabhängige Steuersignale, die in dem Schaltkreis erzeugt werden. Die Praxis hat gezeigt, daß die Festlegung der Zeitdauer der für diesen Anwendungsfall benötigten Steuersignale problematisch ist, weil die Zeitspanne für einen Wischzyklus von Umwelteinflüssen abhängt. Versuche bei Wischanlagen, bei denen alle zeitabhängigen Schalt- und Steuersignale aus einem Taktsignal mit hochkonstanter Frequenz abgeleitet wurden, haben nicht immer zu einem befriedigenden Erfolg geführt.

Der vorliegenden Erfindung liegt also die Aufgabe zugrunde, mit möglichst einfachen Mitteln eine Wischanlage zu schaffen, die in allen Betriebsarten optimal und betriebssicher arbeitet.

Diese Aufgabe wird erfindungsgemäß mit den kennzeichnenden Merkmalen des Anspruchs 1 gelöst.

Der Erfindung liegt dabei die Erkenntnis zugrunde, daß bestimmte Schalt-und Steuersignale aus einem hochkonstanten Taktsignal abgeleitet werden sollten, weil hinsichtlich der Genauigkeit der Zeitdauer dieser Signale besondere Anforderungen bestehen. Die Zeitdauer anderer Schalt- und Steuersignale sollte jedoch variabel sein und beispielsweise von einer Spannung abhängen. Nach der vorliegenden Erfindung soll daher beispielsweise in Abhängigkeit von der eingestellten Betriebsart ein Taktsignal mit konstanter Frequenz oder ein Taktsignal mit einer innerhalb eines bestimmten Bereiches veränderbaren Frequenz erzeugt werden, aus dem dann die zeitabhängigen Schalt- und Steuersignale abgeleitet werden. Das Umschalten von konstanter Taktfrequenz auf variable Taktfrequenz könnte auch in Abhängigkeit vom Betriebszustand des Elektromotors oder dem Ansteuer- bzw. Schaltzustand des Schaltelementes abhängen, über das der Elektromotor gesteuert wird.

Der Grundgedanke der vorliegenden Erfindung kann auf unterschiedliche Arten realisiert werden. Beispielsweise könnte man dem Schaltkreis, der normalerweise in einer integrierten Technik hergestellt wird, zwei Taktgeber zuordnen, wovon der eine ein Taktsignal mit konstanter und der andere ein Taktsignal mit variabler Frequenz auslöst. In Abhängigkeit von der eingestellten Betriebsart könnte man dann das Taktsignal des einen oder anderen Oszillators weiter verarbeiten. Eine solche Schaltung ist aber aufwendig, weil zwei Oszillatoren mit den zeitbestimmenden Bauelementen benötigt werden. Nachteilig ist dabei, daß zusätzlich zu dem erhöhten Platzbedarf auf dem Chip des integrierten Schaltkreises auch zwei zeitbestimmende Kondensatoren erforderlich sind, die meist nicht integrierbar sind und daher als zusätzliche Bauelemente auf einer Leiterplatte verlötet werden müssen.

Bevorzugt wird daher eine zweite Alternative, bei der nur ein Oszillator in den Schaltkreis integriert wird, dessen Taktfrequenz durch eine Eingangsgröße veränderbar ist. Im einfachsten Fall kann es sich dabei um einen sogenannten spannungsgesteuerten Oszillator handeln, dem in einen Falle eine konstante Spannung und im anderen Fall eine variable, von der Spannung der Fahrzeugbatterie abhängige Spannung zugeführt wird. Bei einer solchen Lösung wird zur Erzeugung der umschaltbaren Taktfrequenz des Taktsignales nur wenig Platz auf dem Chip benötigt und es genügt ein zeitbestimmender Kondensator, der jedenfalls bei niederfrequenten Taktsignalen nicht in den Schaltkreis integrierbar ist.

Die Erfindung und weitere vorteilhafte Ausgestaltungen werden nachstehend anhand des schematischen Schaltbildes zu einer Wischanlage erläutert.

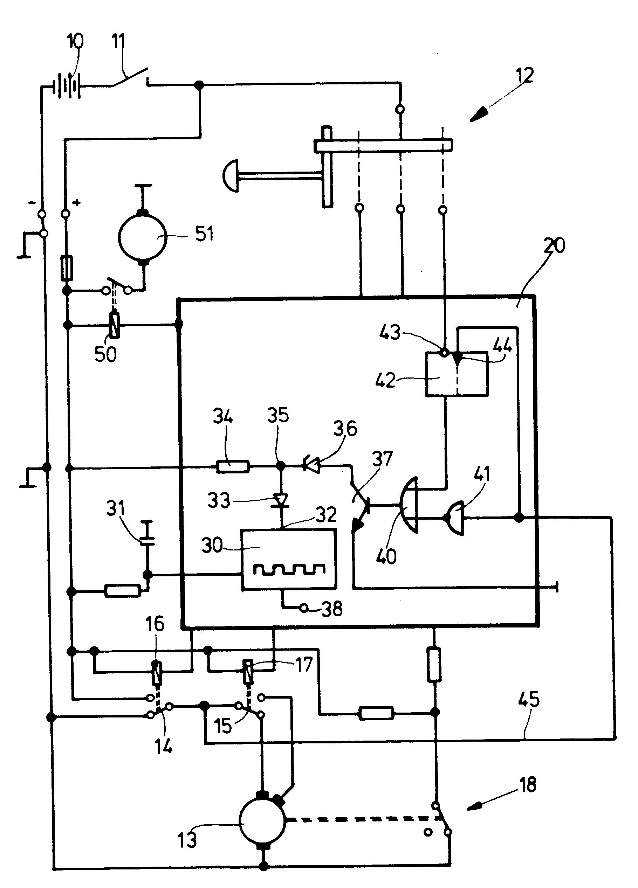

In der Zeichnung sind mit 10 die Batterie, mit 11 der Zündschalter und mit 12 ein Betriebsschalter für eine Wischanlage bezeichnet, deren Scheibenwischer von einem Elektromotor 13 antreibbar sind. Dieser Elektromotor 13 wird in bekannter Weise aus der Batterie 10 des Fahrzeuges über Kontakte 14,15 zweier Schaltelemente 16 und 17 gespeist. Die Schaltelemente 16, 17 sind im vorliegenden Fall durch Relais realisiert, es könnten jedoch auch Tansistoren verwenden werden. Über das Schaltelement 17 kann die Betriebsart der Wischanlage beeinflußt werden, denn es kann in bekannter Weise von hoher Wischgeschwindigkeit auf langsame Wischgeschwindigkeit umgeschaltet werden. Über das andere Schaltelement 16 wird der Betriebsstromkreis des Motors 13 geschaltet. Zu dem Elektromotor 13 gehört in ebenfalls bekannter Weise ein Endlagenschalter 18, der in der Parklage des Scheibenwischers Masse, außerhalb der Paklage jedoch positives Potential dem insgesamt mit 20 bezeichneten Schaltkreis zuführt. Diesem Schaltkreis 20 werden außerdem Schaltsignale des Betriebsschalters 12 zugeführt, der im vorliegenden Ausführungsbeispiel aus der gezeigten Ruhestellung in eine erste Schaltstellung für Dauerbetrieb, dann in eine Schaltstellung für Intervallbetrieb und schließlich in eine Schaltstellung für Wasch-Wisch-Betrieb umstellbar ist. Dieser Schaltkreis 20 wertet diese Signale des Betriebsschalters aus und erzeugt zeitabhängige Schaltsignale zur Ansteuerung der Schaltelemente 16 und 17. Die bis jetzt beschriebenen Merkmale gehören zum Stand der Technik.

Bei der vorliegenden Erfindung soll nun die Taktfrequenz, aus der die zeitabhängigen Schaltsignale abgeleitet werden, veränderbar bzw. umschaltbar sein. Dazu ist in den Schaltkreis 20 ein spannungsgesteuerter Oszillator 30 integriert, zu dem die frequenzbestimmende Kapazität 31 gehört. Dieser Oszillator 30 hat einen Steuereingang 32 und die an diesem Steuereingang 32 anliegende Spannung bestimmt die Frequenz des am Ausgang 38 abgreifbaren Taktsignales dieses Oszillators, aus dem dann in bekannter und daher nicht näher beschriebenen Weise die zeitabhängigen Schalt- und/oder Steuersignale abgeleitet werden. Dieser Steuereingang 32 des Oszillators ist über eine Diode 33 und einen Widerstand 34 mit dem positiven Pol der Schaltung verbunden. kAn den gemeinsamen Verbindungspunkt 35 von Diode 33 und Widerstand 34 ist eine Zenerdiode 36 angeschlossen, deren anderer Anschluß über die Kollektor-Emitter-Strecke eines Transistors 37 an Masse liegt. Der Transistor 37 dient dabei als Schalter, der festlegt, ob am Eingang 32 des Oszillators 30 eine konstante oder eine variable Spannung anliegt. Ist der Transistor 37 nämlich gesperrt, liegt am Eingang 32 des Oszillators 30 über den Widerstand 34 und die Diode 33 die Batteriespannung, die in einem Kraftfahrzeug zwischen 9 und 18 Volt schwanken kann. Ist der Transistor 37 dagegen leitend, wird die Spannung am Eingang 32 des Oszillators im wesentlichen durch die Zenerspannung bestimmt und auf einem konstanten, stabilisierten Wert gehalten.

Der Transistor 37 wird über eine Steuerlogik angesteuert, zu der ein ODER-Gatter 40, ein Inverter 41 sowie eine bistabile Kippstufe 42 gehören. Der Setzeingang 43 der bistabilen Kippstufe wird über den Betriebsschalter 12 angesteuert, wenn der Wisch-Wasch-Betrieb eingeschaltet wird. Dem Rücksetzeingang 44 der Kippstufe 42 wird über die Leitung 45 ein Schaltsignal vom Ausgang des Schaltelementes 16 zugeführt. Auf dieser Leitung 45 liegt also positives Potential, wenn der Motor 13 an Spannung liegt, aber Massepotential, wenn der Motor 13 steht. Dieses Signal auf der Leitung 45 wird auch dem Inverter 41 zugeführt.

Insgesamt arbeitet diese Schaltung folgendermaßen:

Bei ausgeschaltetem Betriebsschalter 12 ist der Elektromotor 13 über die Kontakte 14, 15 der beiden Schaltelemente 16, 17 kurzgeschlossen und in seiner Parklage stillgesetzt, in der der Endlagenschalter 18 die gezeichnete Position einnimmt. Bei eingeschaltetem Zündschalter 11 erzeugt der Oszillator 30 eine konstante Taktfrequenz, weil das Massepotential auf der Leitung 45 über den Inverter 41 invertiert und damit über das ODER-Gatter 40 der Transistor 37 durchgesteuert wird, so daß am Eingang 32 des Oszillators eine konstante Spannung anliegt. Wird nun der Betriebsschalter 12 in seine erste Schaltstellung verstellt, wird von dem Schaltkreis 20 ein Schaltsignal zur Ansteuerung des Schaltelementes 16 ausgelöst und damit der Elektromotor 13 an die Batterie 10 angeschlossen. Auf der Leitung 45 ist damit positives Potential meßbar und folglich wird der Transistor 37 gesperrt. Am Eingang 32 des Oszillators 30 liegt nun die Batteriespannung an. Aus dem Ausgangssignal des Oszillators wird nun ein zeitabhängigers Steuersignal abgeleitet, dessen Zeitdauer geringfügig größer sein soll als die Zeitspanne für einen Wischzyklus. Diese Bezugszeitspanne soll immer dann beginnen, wenn der Wischermotor aus seiner Parklage herauslaufen soll, was durch das Schaltsignal des Endlagenschalters 18 oder durch ein Ansteuersignal für den Wischermotor feststellbar ist. Ist innerhalb dieser Bezugszeitspanne kein erneutes Schaltsignal des Endlagenschalters 18 meßbar, kann davon ausgegangen werden, daß der Wischer blockiert ist. Dann soll der Schaltkreis 20 ein Schaltsignal derart auslösen, daß das Schaltelement 16 abgeschaltet und der Elektromotor 13 von der Spannungsquelle getrennt wird. Auf diese Weise wird also der Motor vor einer unzulässigen Erwärmung in Blockierfalle zuverlässig geschützt. Da die Taktfrequenz des Oszillators 32 von der Batteriespannung abhängt, ist auch eine Abhängigkeit der Bezugszeitspanne von der Batteriespannung gegeben. Diese Abhängigkeit ist so gewählt, daß bei geringerer Batteriespannung die Bezugszeitspanne in dem Maße länger wird, wie sich die Wischzeit für einen Wischzyklus bei abnehmender Betriebsspannung für den *Elektromotor erhöht. Auf diese Weise kann man also sicherstellen, daß die Bezugszeitspannung gewissermaßen laufend der sich bei Betteriespannung ändernden Wischzeit angepaßt wird, wodurch ein rechtzeitiges Abschalten des Elektromotors im Störungsfalle gewährleistet wird.

Im folgenden wird nun angenommen, daß der Betriebsschalter 12 in seine zweite Schaltstellung gebracht ist, in der der Intervallbetrieb eingeschaltet werden soll. Dazu wird zunächst das Schaltelement 16 angesteuert, so daß der Motor 13 an Spannung liegt. Nach Ablauf eines Wischzyklus wird in bekannter Weise über ein Signal des Endlagenschalters 18 und den Schaltkreis 20 das Schaltelement 16 wieder abgestellt, so daß der Elektromotor 13 stillgesetzt wird. Der Schaltkreis 20 erzeugt nun ein die Intervallzeit zwischen zwei Wischvorgängen bestimmendes zeitabhängiges Schaltsignal und erst nach Ablauf dieser Intervallzeit wird das Schaltelement 16 wieder eingeschaltet.

Man erkennt nun aus der Schaltung, daß während der Wischzeit auf der Leitung 45 positives Potential liegt und damit der Transistor 37 gesperrt ist, während in der Intervallzeit zwischen zwei Wischvorgängen auf dieser Leitung 45 Massepotential liegt und damit der Transistor 37 durchgesteuert ist.

Daraus folgt, daß während des Motorlaufes bei gesperrtem Transistor 37 am Eingang 32 des Oszillators 30 eine variable, von der Spannung der Batterie abhängige Eingangsgröße anliegt, während bei stillgesetztem Motor, also in der Intervallzeit zwischen zwei Wischzyklen bei durchgeschaltetem Transistor 37 dem Oszillator eine konstante Spannung als Eingangsgröße zugeführt wird. Während der Motorlaufzeit hängt also die Frequenz des Taktsignales des Oszillators 30 von der Spannung der Batterie ab, so daß in bestmöglicher Weise ein Blockierschutz gewährleistet ist. In der Intervallzeit ist dagegen die Frequenz des Steuersignales des Oszillators 30 konstant, so daß unabhängig von Spannungsschwankungen die gewünschte Intervallzeit mit großer Genauigkeit realisierbar ist.

Ingesamt läßt sich also feststellen, daß bei der in der Zeichnung dargestellten Ausführung im Dauerbetrieb der Wischanlage die Frequenz des Taktsignals des Oszillators variabel ist und von der Batteriespannung abhängt. In einer anderen Betriebsart, nämlich dem Intervallbetrieb, ist dagegen die Frequenz des Steuersignales zeitweise variabel, nämlich wenn der Motor an Spannung liegt, während der Intervallzeit aber konstant, weil bei kurzgeschlossenem Elektromotor 13 der Transistor 37 durchgeschaltet ist. Die Frequenz des Taktsignales hängt also einerseits von der über den Betriebsschalter vorgegebenen Betriebsart und andererseits von dem Schaltzustand des Elektromotors bzw. des diesen Elektromotor steuernden Schaltelementes 16 ab. Dabei ist festzuhalten, daß bei den Betriebsarten "Dauerbetrieb" und "Invervallbetrieb" während der Motorlaufzeit eine variable Taktfrequenz vorgesehen ist, um in bestmöglicherweise den Blockierschutz zu realisieren, und nur im Intvervallbetrieb bei abgeschaltetem Elektromotor eine feste Taktfrequenz vorgegeben wird, um die geforderten Genauigkeiten hinsichtlich der Intervallpause zu gewährleisten.

Im Wisch-Wasch-Betrieb wird aber von diesem Grundsatz abgewichen, und es ist auch bei laufendem Elektromotor eine konstante Frequenz des Taktsignales erwünscht, damit die bei dieser Betriebsart notwendigen zeitabhängigen Steuersignal für den Waschbetrieb, das Nachwischen etc. mit der erforderlichen Genauigkeit erreicht werden. Eine gewisse Ungenauigkeit hinsichtlich der Blockierschutzfunktion wird dabei also bewußt in Kauf genommen. Im Wisch-Wasch-Betrieb wird über den Betriebsschalter 12 die bistabile Kippstufe 42 gesetzt und damit der Transistor 37 durchgesteuert, so daß am Eingang 32 des Oszillators 30 unabhängig vom Motorbetrieb eine konstante Spannung anliegt. Dieser Schaltzustand bleibt zunächst auch erhalten, wenn der Betriebsschalter in seine Ruhelage zurückgestellt wird. Über den Schaltkreis 20 werden weiterhin Steuersignale zur Ansteuerung des Schaltelementes 16 und/oder eines Schaltelemente 50 zur Ansteuerung einer Waschpumpe 51 ausgelöst. Normalerweise läuft der Wisch-Wasch-Betrieb in der Weise ab, daß die Waschpumpe während der Einschaltzeit des Betriebsschalters 12 läuft, nach dem Abschalten des Betriebsschalters aber für eine bestimmte Zeit der Wischermotor 13 eingeschaltet bleibt, während der Waschpumpenmotor 51 sofort abgeschaltet wird. Während dieser sogenannten Nachwischzeit, die möglichst von Umgebungsbedingungen unabhängig sein sollte, liegt also auf der Leitung 45 positives Potential, so daß die monostabile Kippstufe 42 ihren Schaltzustand beibehält. Nach Ablauf der Nachwischzeit wird mit der negativen Schaltflanke auf der Leitung 45 die Kippstufe 42 jedoch wieder zurückgesetzt. Im Wisch-Wasch-Betrieb ist also die Frequenz des Taktsignales des Oszillators auch während der Zeit konstant, in der der Wischermotor an Betriebsspannung liegt. Im Dauerbetrieb bzw. im Intervallbetrieb ist dagegen während der Betriebszeit des Elektromotors die Taktfrequenz des Oszillators 30 variabel.

Abschließend wird darauf hingewiesen, daß das Schaltbild die Grundgedanken der Erfindung nur schematisch zeigt und natürlich eine konkrete Schaltung weitere Bauelemente z.B. zur Entstörung aufweisen wird. Bei der konkreten Schaltung wird auch der Betriebsschalter weitere Schaltstellungen z.B. zur Umstellung der Wischgeschwindigkeiten und zur Vorgabe definierter Intervallzeiten aufweisen. Bei der in der Zeichnung dargestellten Schaltung ist die Steuerleitung gewissermaßen an eine den Betriebsstrom führende Leitung angeschlossen, was zu Störungen führen könnte. Denkbar wäre daher eine Lösung, bei der diese Steuerleitung 45 an den Steuereingang des Schaltelementes 16 angeschlossen wird und damit das Umschalten nicht vom Schaltzustand dieses Schaltelementes, sondern vom Ansteuerzustand abhängt. Denkbar wäre auch eine Schaltung, bei der diese Steuerleitung ein Signal am Endlagenschalter abgreift, denn auch dort ist feststellbar, ob sich der Motor innerhalb oder außerhalb der Parklage befindet, woraus ein entsprechendes Schaltsignal zur Umsteuerung von konstante auf variable Taktfrequenz abgeleitet werden kann.

Bei der vorliegenden Schaltung ist die Taktfrequenz in Abhängigkeit von der Batteriespannung variabel. Es sind durchaus Ausführungen denkbar, bei denen andere Eingangsgrößen, z.B. die Größe des Motorstroms alternativ oder zusätzlich berücksichtigt werden.

**Patentansprüche**

1. Wischanlage für Fahrzeuge mit einem in Abhängigkeit von der Schaltstellung eines Betriebsschalters (12) in unterschiedlichen Betriebsarten betreibbaren Elektromotor (13) zum Antrieb eines Scheibenwischers, wobei der Elektromotor über ein Schaltelement (16) aus einer Batterie gespeist wird, das durch Schaltsignale eines Schaltkreises steuerbar ist, der aus einem Taktsignal zeitabhängige Schalt- und/oder Steuersignale ableitet, dadurch gekennzeichnet, daß die Schalt- und/oder Steuersignale in Abhängigkeit von der eingestellten Betriebsart und/oder dem Betriebszustand des Elektromotors (13) und/oder dem Ansteuer- bzw. Schaltzustand des Schaltelements (16) aus einem Taktsignal mit konstanter Frequenz oder aus einem Taktsignal mit veränderbarer Frequenz ableitbar sind.

2. Wischanlage nach Anspruch 1, dadurch gekennzeichnet, daß das Taktsignal am Ausgang (38) eines Oszillators (30) abgreifbar ist, dessen Frequenz in Abhängigkeit von einer Eingangsgröße, insbesondere von einer Eingangsspannung veränderbar ist.

3. Wischanlage nach Anspruch 2, dadurch gekennzeichnet, daß einem Eingang des Oszillators (30) über einen Schalter (37) eine konstante oder eine variable Spannung als Eingangsgröße zugeführt wird.

4. Wischanlage nach wenigstens einem der vorhergehenden Ansprüche, dadurch gekennzeichnet, daß in einer bestimmten Schaltstellung des Betriebsschalters (12) die Frequenz des Taktsignales dauernd variabel, in einer anderen Schaltstellung aber immer konstant ist.

5. Wischanlage nach wenigstens einem der Ansprüche 1 bis 3, dadurch gekennzeichnet, daß in einer bestimmten Schaltstellung des Betriebsschalters (12) die Frequenz des Taktsignales dauernd variabel, in einer anderen Schaltstellung aber in Abhängigkeit vom Schaltzustand des Motors (13) bzw. des Schaltelementes (16) entweder konstant oder variabel ist.

6. Wischanlage nach nach Anspruch 5, dadurch gekennzeichnet, daß im Dauerbetrieb die Frequenz des Taktsignales variabel, im Intervallbetrieb aber wenigstens zeitweise konstant ist.

7. Wischanlage nach nach Anspruch 6, dadurch gekennzeichnet, daß die Frequenz des Taktsignales im Intervallbetrieb während der Intervallpause konstant, während der Motorlaufzeit aber variabel ist.

8. Wischanlage nach nach Anspruch 7, dadurch gekennzeichnet, daß die Frequenz des Taktsignales bei eingeschaltetem Elektromotor (13) im Dauerbetrieb und im Intervallbetrieb variabel, im Wisch-Wasch-Betrieb aber konstant ist.

**Claims**

1. A wiper system for motor vehicles comprising an electric motor (13) that can be driven in dependence of the switching position of an operating switch (12) in different modes of operation for driving a windshield wiper, whereby the electric motor is supplied from a battery via a switching element (16) which can be controlled by switching signals of a circuit deriving time-dependent switching and/or controlling signals from a timing signal, characterized in that the switching and/or controlling signals can be derived from a timing signal with constant frequency or a timing signal with variable frequency depending on the chosen mode of operation and/or the state of operation of the electric motor (13) and/or the control or switching state of the switching element (16).

2. A wiper system according to claim 1, characterized in that the timing signal can be picked up at the output (38) of an oscillator (30), the frequency of which can be varied in dependence of an input value, especially of an input voltage.

3. A wiper system according to claim 2, characterized in that constant or variable voltage as an input value is conducted to an input of the oscillator (30) via a switch (37).

4. A wiper system according to at least one of the preceding claims, characterized in that in a certain switching position of the operating switch (12) the frequency of a timing signal is continuously variable, but that it is always constant in another switching position.

5. A wiper system according to at least one of the claims 1 to 3, characterized in that in a certain switching position of the operating switch (12) the frequency of the timing signal is continuously variable, but that it is either constant or variable in another switching position depending on the switching state of the motor (13) or of the switching element (16).

6. A wiper system according to claim 5, characterized in that during continuous operation the frequency of the timing signal is variable, but that at least at times it is constant during intermittent operation.

7. A wiper system according to claim 6, characterized in that during intermittent operation the frequency of the timing signal is constant during the interval, whereas for the time the motor is running, however, it is variable.

8. A wiper system according to claim 7, characterized in that in case of the electric motor (13) being switched on the frequency of the timing signal is variable during continuous and intermittent operation, but that it is constant during wipe-wash-operation.

**Revendications**

1. Système essuie-glace pour véhicules, comportant un moteur électrique (13) qui est destiné à entraîner un essuie-glace et qui peut être utilisé dans différents modes de fonctionnement selon la position de commutation d'un commutateur de fonctionnement (12), le moteur électrique étant alimenté à partir d'une batterie par l'intermédiaire d'un élément de commutation (16) commandé par des signaux de commutation d'un circuit de commutation qui dérive d'un signal de rythme des signaux de commutation et/ou de commande dépendants du temps, **caractérisé** en ce que les signaux de commutation et/ou de commande peuvent être dérivés d'un signal de rythme à fréquence constante ou d'un signal de rythme à fréquence modifiable en fonction du mode de fonctionnement réglé et/ou de l'état de fonctionnement du moteur électrique (13) et/ou de l'état de commande ou encore de commutation de l'élément de commutation (16).

2. Système essuie-glace selon la revendication 1, caractérisé en c que le signal de rythme peut être prélevé à la sortie (38) d'un oscillateur (30) dont la fréquence peut être modifiée en fonction d'une grandeur d'entrée, notamment d'une tension d'entrée.

3. Système essuie-glace selon la revendication 2, caractérisé en ce qu'une tension constante ou variable est amenée comme grandeur d'entrée à une entrée de l'oscillateur (30) par l'intermédiaire d'un commutateur (37).

4. Système essuie-glace selon au moins une des revendications précédentes, caractérisé en ce que la fréquence du signal de rythme est variable en permanence dans une position de commutation donnée du commutateur de fonctionnement (12), mais est toujours constante dans une autre position de commutation.

5. Système essuie-glace selon au moins une des revendications 1 à 3, caractérisé en ce que la fréquence du signal de rythme est variable en permanence dans une position de commutation donnée du commutateur de fonctionnement (12), mais est soit constante, soit variable dans une autre position de commutation, selon l'état de commutation du moteur (13) ou encore de l'élément de commutation (16).

6. Système essuie-glace selon la revendication 5, caractérisé en ce que la fréquence du signal de rythme est variable en fonctionnement continu, mais est au moins périodiquement constante en fonctionnement intermittent.

7. Système essuie-glace selon la revendication 6, caractérisé en ce que la fréquence du signal de rythme, en fonctionnement intermittent, est constante pendant les intervalles de pause, mais est variable pendant le temps de fonctionnement du moteur.

8. Système essuie-glace selon la revendication 7, caractérisé en ce que la fréquence du signal de rythme est variable en fonctionnement continu et en fonctionnement intermittent lorsque le moteur électrique (13) est enclenché, mais est constante en fonctionnement d'essuie/lave-glace.